# EUROPÄISCHE PATENTSCHRIFT

(11) **EP 0 561 177 B1**
(45) Veröffentlichungstag und Bekanntmachung des Hinweises auf die Patenterteilung: **12.07.1995**
(21) Anmeldenummer: 93102708.0
(22) Anmeldetag: 20.02.1993
(51) Int. Cl.: B60C 9/22, B60C 9/26, B60C 9/20

(54) **Fahrzeugluftreifen**
Pneumatic vehicle tyre
Bandage pneumatique pour véhicules

(30) Priorität: 19.03.1992 DE 4208859
(43) Veröffentlichungstag der Anmeldung: 22.09.1993
(73) Patentinhaber: Continental Aktiengesellschaft, 30165 Hannover (DE)
(72) Erfinder: Flebbe, Werner, W-3057 Neustadt a. Rbge (DE); Frerichs, Udo, W-3012 Langenhagen (DE); Johannes, Günter, W-3008 Garbsen 2 (DE); Kachel, Uwe, W-3174 Meine (DE); Knauf, Werner, W-3050 Wunstorf 1 (DE); Peda, Karl, W-3050 Wunstorf 1 (DE); Petersmann, Norbert, Dr., W-3000 Hannover 91 (DE)

(56) Entgegenhaltungen:
- EP-A- 0 400 859
- EP-A- 0 455 454
- FR-A- 2 446 193
- GB-A- 2 061 202
- GB-A- 2 092 964
- GB-A- 2 253 818

## Beschreibung

Die Erfindung betrifft einen Fahrzeugluftreifen mit einer Karkasse, die in den Wülsten durch Umschlingen zugfester Wulstkerne verankert ist, mit einem mehrlagigen Verstärkungsgürtel und mit zumindest zwei durch Spulung streifenförmigen Materials erzeugten Wickelbandagen.

Es sind Fahrzeugluftreifen bekannt, bei denen die Wickelbandagen in Form von Kantenbandagen vorliegen und die Bereiche der beiden Gürtelränder abdecken. Es sind weiterhin ein- und mehrlagige Wickelbandagen bekannt, die sich über die gesamte Gürtelbreite erstrecken. Aus GB-A-2 061 202 ist ein Fahrzeugluftreifen gemäß der Oberbegriff des Anspruchs 1 bekannt.

Der Erfindung liegt die Aufgabe zugrunde, einen verbesserten Reifen mit einer Wickelbandage anzugeben, die zum einen die Gürtelränder besser fesselt und zum anderen den speziellen Erfordernissen im Mittelbereich des Gürtels angepaßt ist.

Diese Aufgabe wird erfindungsgemäß dadurch gelöst, daß die beiden Wickelbandagen die Ränder von zumindest einer Gürtellage umfassen und daß radial außen vom Gürtel in dessen Mittenbereich eine weitere Wickelbandage vorhanden ist, deren Fäden in unterschiedlicher Dichte oder mit einem unterschiedlichen Durchmesser zu den Fäden der erstgenannten Wickelbandagen vorliegen oder aus einem schrumpfärmeren Material bestehen.

Mit der Erfindung erzielt man den Vorteil, daß die Ränder einzelner Gürtellagen oder der gesamten Gürtels in ihrer Lage besser fixiert werden. Die Einfassung einer Gürtellage mit Wickelbandagen erfolgt in der Weise, daß zunächst der radial innere Teil der beiden Wickelbandagen erzeugt wird, wobei jeweils der Anfang axial innen liegt und nach axial außen gewickelt wird, daß danach die einzufassende Gürtellage aufgelegt wird und anschließend zur Vervollständigung der beiden Wickelbandagen radial außen von der Gürtellage von axial außen nach axial innen gewickelt wird. Radial außen vom Gürtel befindet sich in dessen Mittenbereich eine weitere Wickelbandage, deren Eigenschaften den Erfordernissen in diesem Bereich des Gürtels angepaßt sind. Da in der Regel im Randbereich des Gürtels eine stärkere Fesselung gewünscht wird als im Mittenbereich, läßt sich vorliegend die Wickelbandage für den Mittelbereich dahingehend anpassen, daß entweder die Materialstreifen dieser Bandage eine geringere Fadendichte aufweisen oder daß Fäden mit geringerem Durchmesser verwendet werden oder daß die Mittelbandage aus einem völlig anderen Material erstellt wird. Da die Schrumpfeigenschaft einer Wickelbandage primär nur im Randbereich des Gürtels von Bedeutung ist, läßt sich die mittlere Bandage aus einem Material herstellen, das nicht einem solchen Schrumpf unterliegt, z.B. aus Reyon.

Als Streifenmaterial für die seitlichen Wickelbandagen kommt gummierter Nyloncord in Frage, wobei die Streifenbreite zwischen 8 und 25 mm liegen kann und die in Längsrichtung des Streifens verlaufenden Nylonfäden in einer Dichte von 10 bis 15 Fäden pro 10 mm Streifenbreite vorhanden sein können. Die mittlere Bandage läßt sich ebenfalls aus Nyloncord herstellen, wobei die Fadendichte im Bereich von 5 bis 12 Fäden pro 10 mm Streifenbreite liegen sollte. Wenn bei der Mittelbandage Fäden geringerer Dicke eingesetzt werden, kann die Dichte auch bis 15 Fäden pro 10 mm Streifenbreite betragen. Wie bereits ausgeführt, kann man für die Mittelbandage als Material auch Reyon wählen oder aber auch einen anderen Kunststoff.

Nachfolgend wird die Erfindung anhand einer Zeichnung näher erläutert. Es zeigt
- Fig. 1: einen Fahrzeugluftreifen mit drei Wickelbandagen, bei dem die radial äußere Gürtellage von zwei Kantenbandagen eingefaßt wird, in einem radialen Teilschnitt,
- Fig. 2: einen Fahrzeugluftreifen mit drei Wickelbandagen, bei dem der gesamte Gürtel von zwei Kantenbandagen eingefaßt wird, in einem radialen Teilschnitt.

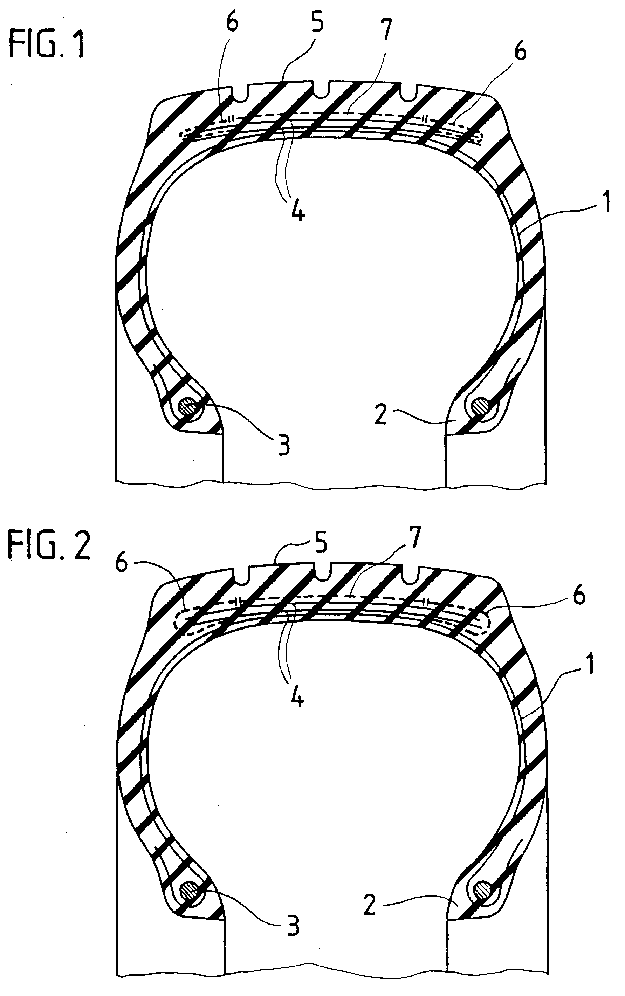

Der Reifen der Fig. 1 weist eine Radialkarkasse 1 auf, die in den Wülsten 2 durch Umschlingen zugfester Wulstkerne 3 verankert ist. Bei Bedarf kann es auch eine Diagonalkarkasse sein. Radial außen von der Karkasse 1 befindet sich ein üblicher Verstärkungsgürtel 4, der aus zwei im Kreuzverband angeordneten zugfesten, dehnungsarmen Lagen, vorzugsweise aus Stahlcord oder Aramid besteht. In den beiden Randbereichen des Gürtels 4 befindet sich zwischen ihm und dem Laufstreifen 5 je eine Wickelbandage 6 in Form einer Kantenbandage, die darüber hinaus die Ränder der radial äußeren Gürtellage einfaßt. Weiterhin befindet sich im Mittelbereich des Gürtels eine dritte Wickelbandage 7, die wie auch die beiden Kantenbandagen 6 aus gummiertem Nyloncord besteht, jedoch sind bei der Mittelbandage 7 gegenüber den beiden Kantenbandagen 6 dünnere Nylonfäden eingesetzt.

Zur Erzeugung des Gürtelverbandes mit den beiden Wickelbandagen 6 und der Mittelbandage 7 wird zunächst die radial innere Lage des Gürtels 4 aufgelegt. Danach beginnt man mit dem Wickeln der beiden Kantenbandagen 6 von axial innen nach axial außen bis der Gürtelrand erreicht ist.

Anschließend wird die zweite Stahlcordlage des Gürtels aufgelegt und danach mit dem Wickeln der beiden Wickelbandagen 6 fortgefahren, wobei man nunmehr von axial außen nach axial innen wickelt. Anschließend oder gleichzeitig wird die Wickelbandage 7 für den Mittenbereich erzeugt. Es ist besonders günstig, wenn die drei Bandagen radial außen vom Gürtel 4 unmittelbar aneinanderstoßen oder auch überlappen, so daß im wesentlichen eine durchgehende Lage erzeugt ist. In axialer Richtung erfolgt die Aufteilung in der Weise, daß die beiden Kantenbandagen 6 höchstens ein Drittel der axialen Gürtelbreite einnehmen, bevorzugt jedoch etwa ein Viertel.

Das Beispiel der Fig. 2 unterscheidet sich von dem der Fig. 1 lediglich dadurch, daß nunmehr die beiden Wickelbandagen 6, die wiederum in Form von Kantenbandagen vorliegen, den gesamten Gürtel an seinen Rändern umfassen. Entsprechend wird zum Aufbau dieses Verbundes zunächst mit dem Wickeln des radial inneren Teils der beiden Wickelbandagen 6 begonnen, danach der Gürtel 4 durch Auflegen der beiden Lagen im Kreuzverband erzeugt und danach das Wickeln der Kantenbandagen 6 fortgesetzt, wobei gleichzeitig oder anschließend die Mittelbandage 7 erzeugt wird.

## Patentansprüche

1. Fahrzeugluftreifen mit einer Karkasse (1), die in den Wülsten (2) durch Umschlingen zugfester Wulstkerne (3) verankert ist, mit einem mehrlagigen Verstärkungsgürtel (4) und mit zumindest zwei durch Spulung streifenförmigen Materials erzeugten Wickelbandagen (6),
**dadurch gekennzeichnet,**
daß die beiden Wickelbandagen (6) die Ränder von zumindest einer Gürtellage umfassen und daß radial außen vom Gürtel (4) in dessen Mittenbereich eine weitere Wickelbandage (7) vorhanden ist, deren Fäden in unterschiedlicher Dichte oder mit einem unterschiedlichen Durchmesser zu den Fäden der erstgenannten Wickelbandagen (6) vorliegen oder aus einem schrumpfärmeren Material bestehen.

2. Fahrzeugluftreifen nach Anspruch 1, dadurch gekennzeichnet, daß die erstgenannten Wickelbandagen (6) alle Lagen des Gürtels (4) umfassen.

3. Fahrzeugluftreifen nach Anspruch 1, dadurch gekennzeichnet, daß die Streifen der im Mittelbereich des Gürtels (4) angeordneten Wickelbandage (7) eine geringere Fadendichte haben als die der seitlichen Bandagen (6).

4. Fahrzeugluftreifen nach Anspruch 1, dadurch gekennzeichnet, daß die Fäden der im Mittelbereich des Gürtels (4) angeordneten Wickelbandage (7) einen kleineren Durchmesser aufweisen als die der seitlichen Bandagen (6).

## Claims

1. Pneumatic vehicle tyre, having a carcase (1), which is secured in the beads (2) by being looped around substantially inextensible bead cores (3), a multiple-ply reinforcing belt (4), and at least two wound bandages (6) produced by winding strip-like material, characterised in that the two wound bandages (6) surround the edges of at least one belt ply, and in that an additional wound bandage (7) is provided in the central region of the belt (4) radially externally thereof, the filaments of said additional bandage having a variable density or having a variable diameter relative to the filaments of the first-mentioned wound bandages (6) or are formed from a less shrinkable material.

2. Pneumatic vehicle tyre according to claim 1, characterised in that the first-mentioned wound bandages (6) surround all of the plies of the belt (4).

3. Pneumatic vehicle tyre according to claim 1, characterised in that the strips of the wound bandage (7) disposed in the central region of the belt (4) have a smaller filament density than those of the lateral bandages (6).

4. Pneumatic vehicle tyre according to claim 1, characterised in that the filaments of the wound bandage (7) disposed in the central region of the belt (4) have a smaller diameter than those of the lateral bandages (6).

## Revendications

1. Bandage pneumatique pour véhicule avec une carcasse (1), qui est ancrée dans les talons (2) par le fait qu'elle embrasse des noyaux de talon résistant à la traction (3), avec une ceinture de renforcement à plusieurs couches (4) et avec au moins deux bandages enroulés (6) produits par bobinage d'une matière en forme de bande, caractérisé en ce que les deux bandes enroulées (6) comprennent les deux bords d'au moins une couche de ceinture et en ce que radialement à l'extérieur de la ceinture (4) dans sa partie médiane se trouve un autre bandage enroulé (7), dont les fils sont disposés avec une densité différente ou ont un diamètre différent par rapport aux fils du bandage enroulé mentionné en premier (6), ou se composent d'une matière moins rétrécissable.

2. Bandage pneumatique pour véhicule selon la revendication 1, caractérisé en ce que les bandages enroulés mentionnés en premier (6) comprennent toutes les couches de la ceinture (4).

3. Bandage pneumatique pour véhicule selon la revendication 1, caractérisé en ce que les bandes du bandage enroulé (7) disposé dans la partie médiane de la ceinture (4) ont une densité de fils plus faible que celle des bandages latéraux (6).

4. Bandage pneumatique pour véhicule selon la revendication 1, caractérisé en ce que les fils (7) du bandage enroulé disposé dans la partie médiane de la ceinture (4) ont un plus petit diamètre que ceux des bandages latéraux (6).
